# EUROPÄISCHE PATENTANMELDUNG

(11) **EP 4 825 910 A1**
(43) Veröffentlichungstag der Anmeldung: **21.10.2026**
(21) Anmeldenummer: 26170942.2
(22) Anmeldetag: 07.04.2026
(51) Int. Cl.: C08L 7/00, B60C 1/00

(54) **SCHWEFELVERNETZBARE KAUTSCHUKMISCHUNG, VULKANISAT, REIFENBAUTEIL UND FAHRZEUGREIFEN**

(30) Priorität: 11.04.2025 DE 102025114370
(71) Anmelder: Continental Reifen Deutschland GmbH, 30175 Hannover (DE)
(72) Erfinder: Schmidt, Philipp, 30175 Hannover (DE); Jacob, Andreas, 30175 Hannover (DE); Strohmeier, Julian, 30175 Hannover (DE); Haubold, Thorben Soeren, 30175 Hannover (DE); Fleck, Frank, 30175 Hannover (DE); Recker, Carla, 30175 Hannover (DE)
(74) Vertreter: Continental Corporation

(57) **Zusammenfassung**

Die Erfindung betrifft eine schwefelvernetzbare Kautschukmischung, vorzugsweise für einen Fahrzeugreifen, besonders bevorzugt für eine Seitenwand eines Fahrzeugreifens, ein entsprechendes Vulkanisat, ein entsprechendes Reifenbauteil, sowie einen Fahrzeugreifen, der solch ein Bauteil aufweist, die Mischung umfassend
(a) einen oder mehr als einen Polyisopren-Kautschuk in einer Gesamtmenge in einem Bereich von 40 bis 80 phr;
(b) einen oder mehr als einen von (a) verschiedenen Dienkautschuk in einer Gesamtmenge in einem Bereich von 20 bis 60 phr;
(c) eine oder mehr als eine Verbindung der Formel (I) wie im Text weiter definiert 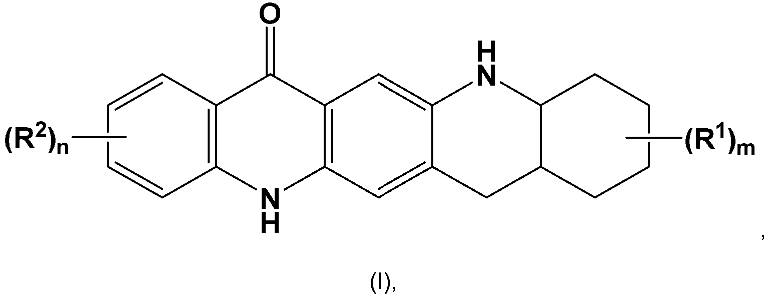 (d) einen oder mehr als einen Ruß als Füllstoff in einer Gesamtmenge in einem Bereich von 25 bis 55 phr; und
(e) als zusätzliches Alterungsschutzmittel 2,2,4-Trimethyl-1,2-dihydrochinolin (TMQ), Dimere, Oligomere und/oder Polymere daraus.

## Beschreibung

Die Erfindung betrifft eine schwefelvernetzbare Kautschukmischung, vorzugsweise für einen Fahrzeugreifen, besonders bevorzugt für eine Seitenwand eines Fahrzeugreifens, ein entsprechendes Vulkanisat, ein entsprechendes Reifenbauteil, sowie einen Fahrzeugreifen, der solch ein Bauteil aufweist, die Mischung umfassend
(a) einen oder mehr als einen Polyisopren-Kautschuk in einer Gesamtmenge in einem Bereich von 40 bis 80 phr;
(b) einen oder mehr als einen von (a) verschiedenen Dienkautschuk in einer Gesamtmenge in einem Bereich von 20 bis 60 phr;
(c) eine oder mehr als eine Verbindung der Formel (I) wie im Text weiter definiert 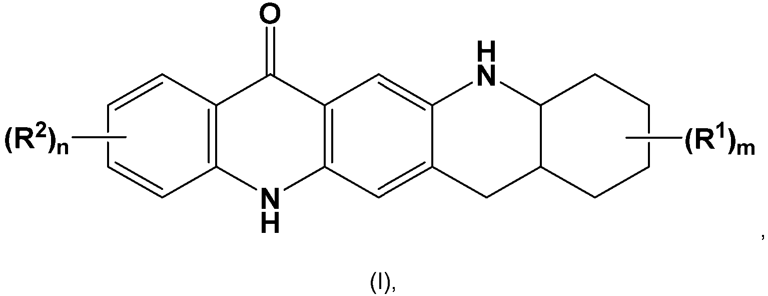
(d) einen oder mehr als einen Ruß als Füllstoff in einer Gesamtmenge in einem Bereich von 25 bis 55 phr; und
(e) als zusätzliches Alterungsschutzmittel 2,2,4-Trimethyl-1,2-dihydrochinolin (TMQ), Dimere, Oligomere und/oder Polymere daraus.

Die Verbindung der Formel (I), vorzugsweise alle Ausführungen davon, die nachfolgend als bevorzugt beschrieben werden, inkl. der Verbindung der Formel (II), dienen als Alterungsschutzmittel in der erfindungsgemäßen Kautschukmischung, vorzugsweise als ein gegenüber 6PPD mit verbesserter Wirkung wirkendes Alterungsschutzmittel.

Es ist bekannt, dass in Fahrzeugreifen polymere Verbindungen, insbesondere Kautschuke, eingesetzt werden. Naturkautschuk (NR), synthetische Polymere (beispielsweise IR**,** BR, SSBR, ESBR, etc.) aber auch natürliche sowie synthetische Öle und Harze unterliegen bei längerer Lagerung und häufig konkret in der Zielanwendung, die oft bei höheren Temperaturen abläuft, Oxidationsreaktionen, die sich nachteilig auf die ursprünglich gewünschten Eigenschaften auswirken. Je nach Art der Kautschuke leiden diese mehr oder weniger unter Brüchen in der Polymerkette, so dass eine nachträgliche, unerwünschte Härtung des Materials bzw. Artikels eintritt.

Alterungsschutzmittel tragen daher maßgeblich zu einer verbesserten Langlebigkeit von entsprechenden Zusammensetzungen bzw. Fahrzeugreifen bei.

Typische Alterungsschutzmittel sind aromatische Amine, wie beispielsweise 6PPD (N-(1,3-Dimethylbutyl)-N'-phenyl-p-phenylendiamin), IPPD (N-Isopropyl-N'-phenyl-p-phenylendiamin) oder SPPD (N-(1-phenylethyl)-N'-phenyl-p-phenylendiamin). Diese Verbindungen und Alterungsschutzmittel im Allgemeinen können mit Sauerstoff, Ozon und/oder Radikalen, vorzugsweise Alkyl-, Alkoxy- und Alkylperoxyradikalen, reagieren und diese abfangen und somit die polymeren bzw. langkettigen Verbindungen, die typischerweise in den Kautschuken vorliegen, vor insbesondere unerwünschten Oxidations- und radikalischen Reaktionen schützen. Alterungsschutzmittel, die mit Ozon reagieren bzw. dieses abfangen, werden häufig auch spezifisch "Ozonschutzmittel" oder "Antiozonant" genannt.

Nachteil der oben genannten Verbindungen ist allerdings der Verdacht, dass diese krebserregend und/oder umweltschädlich sein könnten. Daher ist es ein regelmäßiges Bedürfnis neue Alterungsschutzmittel mit mindestens ähnlichem Alterungsschutz bereitzustellen, aber eine potentiell geringere Belastung für die Umwelt darstellen.

Alternative Alterungsschutzmittel sind durchaus bekannt. So offenbart WO 2023/143677 A1 Alterungsschutzmittel auf Acridon-Basis für Kautschukmischungen.

In der Praxis müssen solche neuen Alterungsschutzmittel jedoch nicht nur eine ausreichend lange Wirkung (idealerweise über die Lebensdauer eines Reifens), sondern auch bei adäquater Einsatzmenge eine ausreichend starke Schutzwirkung über diesen Zeitraum erzielen. Dabei spielen unter anderem Faktoren wie Löslichkeit und Diffusion innerhalb der vulkanisierten Kautschukmischung eine bedeutende Rolle. Aber auch ein Zusammenspiel mit weiteren Mischungsbestandteilen, die beispielsweise negative Effekte ausgleichen oder andere wünschenswerte Eigenschaften betonen, muss letztendlich gegeben sein. Idealerweise bieten alternative Alterungsschutzmittel zudem einen besseren bzw. lang anhaltenden Alterungsschutz.

Der vorliegenden Erfindung liegt die Aufgabe zugrunde, insbesondere von 6PPD verschiedene Verbindungen bereitzustellen, die neben einer potentiell geringeren Umweltbelastung sowohl einen ausreichend langanhaltenden als auch ausreichend starken Alterungsschutz in entsprechenden Reifenbauteilen bereitstellen. Zudem sollen die Verbindungen einen tatsächlichen Einsatz in der Praxis ermöglichen und in Wechselwirkung mit anderen Mischungsbestandteilen keine negativen Effekte hervorrufen. Dies ist insbesondere wichtig mit Blick auf komplexe Kautschukmischungen, wie beispielsweise solche, die für Seitenwände eines Fahrzeugreifens eingesetzt werden.

Gelöst wird diese Aufgabe durch die erfindungsgemäße schwefelvernetzbare Kautschukmischung umfassend
(a) einen oder mehr als einen Polyisopren-Kautschuk in einer Gesamtmenge in einem Bereich von 40 bis 80 phr;
(b) einen oder mehr als einen von (a) verschiedenen Dienkautschuk in einer Gesamtmenge in einem Bereich von 20 bis 60 phr;
(c) eine oder mehr als eine Verbindung der Formel (I) 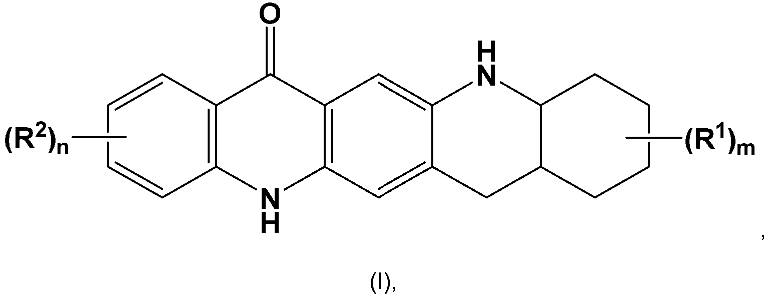 wobei
   R¹ an der äußeren Cyclohexan-Gruppe und/oder der benachbarten Piperidin-Gruppe gebunden ist und unabhängig voneinander ausgewählt ist aus der Gruppe bestehend aus
      xi) C₁- bis C₄-Alkyl-Resten und C₁- bis C₄-Alkoxy-Resten,
      und
   der Rest R² unabhängig voneinander ausgewählt ist aus der Gruppe bestehend aus
      aliphatischen C₁- bis C₁₂-Resten, aromatischen Resten, Halogen-Resten, Cyano-Resten, Ester-Resten, Keton-Resten, Ether-Resten und Thioether-Resten,
   und wobei
      n den Wert 0 oder 1 oder 2 oder 3 oder 4 annimmt und die Reste R² im Fall von n gleich 2 oder 3 oder 4 unabhängig voneinander gleich oder verschieden sind, und
      m eine ganze Zahl in einem Bereich von 1 bis 12 ist, wobei die Reste R¹ im Fall von m gleich 2 oder größer unabhängig voneinander gleich oder verschieden sind;
(d) einen oder mehr als einen Ruß als Füllstoff in einer Gesamtmenge in einem Bereich von 25 bis 55 phr; und
(e) als zusätzliches Alterungsschutzmittel 2,2,4-Trimethyl-1,2-dihydrochinolin (TMQ), Dimere, Oligomere und/oder Polymere daraus.

Die erfindungsgemäße Kautschukmischung enthält insgesamt mindestens zwei Alterungsschutzmittel; d.h. mindestens eine Verbindung gemäß (c) und mindeste eine Verbindung gemäß (e), wobei die Verbindung gemäß (c) ein Acridon-Derivat ist. Es weist gegenüber Kautschukmischungen mit dem sehr bekannten 6PPD nicht nur ein geringeres Gefahrenpotential auf (6PPD bzw. Abbauprodukte davon werden als toxisch für den Silberlachs eingestuft), sondern zusätzlich eine gegenüber 6PPD qualitativ verbesserte Schutzwirkung, wenn es insbesondere für Seitenwandkautschukmischungen eingesetzt wird. Dies ist insbesondere der Fall, wenn es in Kombination mit dem klassischen Alterungsschutzmittel gemäß (e) in Kombination eingesetzt wird. Obwohl aus der WO 2023/143677 A1 bereits eine verbesserte Langzeitwirkung in eher einfachen Kautschukmischungen gegenüber 6PPD beschrieben wurde, wurde nun überraschend festgestellt, dass Acridon-Derivate in hier definierten Kautschukmischungen in Kombination mit dem klassischerweise eingesetzten TMQ (ein typischer Vertreter einer Verbindung gemäß (e)) eine synergistisch verstärkte Alterungsschutzwirkung erzielen (siehe Beispiele unten). Im Kontext der vorliegenden Erfindung gilt jedoch grundsätzlich, dass die Erfindung nicht an einen bestimmten Wirkmechanismus oder eine bestimmte Erklärung gebunden sein soll.

Im Kontext der vorliegenden Erfindung bedeutet die verwendete Angabe phr (parts per hundred parts of rubber by weight) die in der Kautschukindustrie übliche Mengenangabe für Mischungen. Die Dosierung der Gewichtsteile wird dabei stets auf 100 Gewichtsteile der gesamten Masse aller in der Mischung vorhandenen festen Kautschuke bezogen bzw. referenziert.

Im Kontext der vorliegenden Erfindung gilt, dass sämtliche bevorzugte Ausgestaltungen, die sich unter anderem in den Patentansprüchen widerspiegeln, ebenfalls mit umfasst sind. Insbesondere sind von der Erfindung auch Ausgestaltungen umfasst und gelten als offenbart, die sich durch Kombination unterschiedlicher Merkmale ergeben (auch mit jeweils unterschiedlicher Abstufung bei der Bevorzugung dieser Merkmale), sodass auch eine Kombination eines ersten als "bevorzugt" bezeichneten Merkmals mit einem zweiten als z. B. "besonders bevorzugt" bezeichneten Merkmals von der Erfindung umfasst und offenbart ist.

Nachfolgend wird die schwefelvernetzbare Kautschukmischung im Detail beschrieben.

Die erfindungsgemäße Kautschukmischung ist vorzugsweise eine Seitenwandkautschukmischung und insbesondere dafür geeignet.

Die erfindungsgemäße Kautschukmischung umfasst gemäß (a) einen oder mehr als einen Polyisopren-Kautschuk in einer Gesamtmenge in einem Bereich von 40 bis 80 phr. Vorzugsweise handelt es sich dabei um feste Kautschuke, referenziert auf eine Temperatur von 25°C.

Besonders bevorzugt ist eine erfindungsgemäße Kautschukmischung, vorzugsweise wie als bevorzugt beschrieben, wobei der eine oder mehr als eine Polyisopren-Kautschuk gemäß (a) der überwiegende Kautschuk in der Mischung ist (d.h. mit vorzugsweise mindestens 51 phr vorliegt) und somit die erfindungsgemäße Kautschukmischung in ihrer Basis eine auf Polyisopren beruhende Kautschukmischung ist. In anderen Fällen ist eine erfindungsgemäße Kautschukmischung bevorzugt, wobei der eine oder mehr als eine Polyisopren-Kautschuk gemäß (a) im Bereich von 40 bis 49 phr vorliegt, d.h., die erfindungsgemäße Kautschukmischung in ihrer Basis eine auf Komponente (b) beruhende Kautschukmischung ist.

Grundsätzlich gilt, dass die Summe aus Komponente (a) und (b) 100 phr ergibt.

Bevorzugt ist eine erfindungsgemäße Kautschukmischung, vorzugsweise wie als bevorzugt beschrieben, wobei der eine oder mehr als eine Polyisopren-Kautschuk gemäß (a) in einer Gesamtmenge von 40 bis 75 phr vorliegt, vorzugsweise von 40 bis 70 phr, weiter vorzugsweise von 40 bis 65 phr vorliegt, besonders vorzugsweise von 40 bis 60 phr, insbesondere bevorzugt von 40 bis 55 phr, am bevorzugtesten von 40 bis 50 phr. In diesen bevorzugten Mengenbereichen liegen der Kautschukmischung ideale Reiß- und Steifigkeitseigenschaften zugrunde. Typischerweise wird der zu 100 phr verbliebene Anteil von dem von (a) verschiedenen Dienkautschuk gemäß (b) aufgefüllt.

Bevorzugt ist eine erfindungsgemäße Kautschukmischung, vorzugsweise wie als bevorzugt beschrieben, wobei der eine oder mehr als eine Polyisopren-Kautschuk gemäß (a) mindestens einen natürlichen Polyisopren-Kautschuk (auch bekannt als und gleichbedeutend mit den Begriffen Naturkautschuk oder natürlicher Kautschuk: abgekürzt mit "NR"), mindestens einen synthetischen Polyisopren-Kautschuk (abgekürzt mit "IR") und/oder mindestens einen epoxidierten Polyisopren-Kautschuk (ENR) umfasst; vorzugsweise mindestens einen natürlichen Polyisopren-Kautschuk (NR) und/oder mindestens einen synthetischen Polyisopren-Kautschuk (IR), besonders bevorzugt mindestens einen natürlichen Polyisopren-Kautschuk (NR). Vorzugsweise umfasst der eine oder mehr als eine Polyisopren-Kautschuk gemäß (a) ausschließlich einen oder mehr als einen natürlichen Polyisopren-Kautschuk (NR), besonders bevorzugt wie nachfolgend als bevorzugt beschrieben.

Natürliches Polyisopren (NR) bedeutet einen Kautschuk, der durch Ernte von natürlichen Quellen wie Kautschukbäumen (Hevea brasiliensis) oder nicht-Kautschukbaumquellen (wie z. B. Guayule oder Löwenzahn (z. B. Taraxacum koksaghyz)) gewonnen wird. Zudem wird im Kontext der vorliegenden Erfindung unter natürlichem Polyisopren (NR) kein synthetisches Polyisopren (IR) verstanden, sondern ist davon zu unterscheiden.

Vorzugsweise umfasst der eine oder mehr als eine Polyisopren-Kautschuk gemäß (a) mindestens einen *cis*-1,4-Polyisopren-Kautschuk und/oder mindestens einen 3,4-Polyisopren-Kautschuk. Dies gilt vorzugsweise unabhängig davon, ob es sich um einen natürlichen oder synthetischen Polyisopren-Kautschuk handelt. Bevorzugt ist mindestens ein *cis*-1,4-Polyisopren-Kautschuk mit besonders bevorzugt einem *cis-*1,4 Anteil größer 90 Gew.-%. Solch ein Polyisopren-Kautschuk wird vorzugsweise durch stereospezifische Polymerisation in Lösung mit Ziegler-Natta-Katalysatoren oder unter Verwendung von fein verteiltem Lithiumalkylen erhalten. Weiterhin handelt es sich typischerweise auch bei Naturkautschuk (NR) um einen solchen *cis*-1,4 Polyisopren-Kautschuk. Besonders bevorzugt ist daher mindestens ein Naturkautschuk (NR) umfassend mindestens einen cis-1,4-Polyisopren-Kautschuk, vorzugsweise mit einem cis-1,4-Anteil größer oder gleich 99 Gew.-%.

Der eine oder mehr als eine Polyisopren-Kautschuk gemäß (a) weist vorzugsweise ein gewichtsmittleres Molekulargewicht Mw gemäß GPC in einem Bereich von 250.000 bis 5.000.000 g/mol auf. Es gehört somit zu den hochmolekularen Kautschuken, die in die Hundert Teile bei der Berechnung der phr-Bezugsgröße eingehen.

Die erfindungsgemäße Kautschukmischung umfasst zudem gemäß (b) einen oder mehr als einen von (a) verschiedenen Dienkautschuk in einer Gesamtmenge in einem Bereich von 20 bis 60 phr. Somit ist der eine oder mehr als eine Dienkautschuk gemäß (b) nicht optional, sondern zwingend vorhanden.

Im Kontext der vorliegenden Erfindung ist ein Dienkautschuk durch Polymerisation oder Copolymerisation von Dienen und/oder Cycloalkenen entstanden und weist somit entweder in der Hauptkette oder in den Seitenketten C=C-Doppelbindungen auf. Typische Monomere für eine Polymerisation umfassen Isopren und Butadien.

Vorzugsweise handelt es sich bei dem einen oder mehr als einen von (a) verschiedenen Dienkautschuk gemäß (b) um feste Dienkautschuke, referenziert auf eine Temperatur von 25°C.

Wie bereits oben gesagt, bildet vorzugsweise der eine oder mehr als eine von (a) verschiedene Dienkautschuk gemäß (b) den mengenmäßig größten Anteil der Kautschuke in der erfindungsgemäßen Kautschukmischung. Bevorzugt ist die Gesamtmenge von (b) größer 50 phr, vorzugsweise 51 bis 60 phr.

Besonders bevorzugt ist eine erfindungsgemäße Kautschukmischung, wobei der eine oder mehr als eine von (a) verschiedene Dienkautschuk (d.h. gemäß (b)) in einer Gesamtmenge von 25 bis 60 phr vorliegt, vorzugsweise von 30 bis 60 phr, weiter vorzugsweise von 35 bis 60 phr, insbesondere vorzugsweise von 40 bis 60 phr, ganz besonders bevorzugt von 45 bis 60 phr, am bevorzugtesten von 50 bis 60 phr. Vorzugsweise wird der zu 100 phr verbliebene Anteil von dem einen oder mehr als einen Polyisopren-Kautschuk gemäß (a) aufgefüllt.

Vorzugsweise umfasst der eine oder mehr als eine von (a) verschiedene Dienkautschuk (d.h. gemäß (b)) einen oder mehr als einen Styrol-Butadien-Kautschuk (SBR), einen oder mehr als einen Butadien-Isopren-Kautschuk, einen oder mehr als einen hydrierten Styrol-Butadien-Kautschuk, und/oder einen oder mehr als einen Butadien-Kautschuk (BR); vorzugsweise einen oder mehr als einen Butadien-Kautschuk (BR) und/oder, vorzugsweise und, einen oder mehr als einen Styrol-Butadien-Kautschuk (SBR). Die erfindungsgemäße Kautschukmischung ist in vielen Fällen vorzugsweise ein sogenannter Tri-Blend, vorzugsweise aus mindestens einem NR, mindestens einem BR und mindestens einem SBR.

Im Falle eines Styrol-Butadien-Kautschuks (SBR), handelt es sich vorzugsweise um einen festen Styrol-Butadien-Kautschuk (SBR), referenziert auf eine Temperatur von 25°C. Besonders bevorzugt umfasst der eine oder mehr als eine Styrol-Butadien-Kautschuk (SBR) mindestens einen lösungspolymerisierten Styrol-Butadien-Kautschuk (SSBR) und/oder mindestens einen emulsionspolymerisierten Styrol-Butadien-Kautschuk (ESBR).

Besonders bevorzugt umfasst der eine oder mehr als eine Butadien-Kautschuk (BR) einen sogenannten hoch-cis Butadien-Kautschuk (BR), vorzugsweise mit einem cis-Anteil von 90% oder mehr, besonders bevorzugt von 95% oder mehr, ganz besonders bevorzugt von 98% oder mehr. Vorzugsweise ist auch der Butadien-Kautschuk ein fester Kautschuk, referenziert auf eine Temperatur von 25°C.

In manchen Fällen ist eine erfindungsgemäße Kautschukmischung bevorzugt, vorzugsweise wie als bevorzugt beschreiben, wobei der eine oder mehr als eine von (a) verschiedenen Dienkautschuk jeweils ein gewichtsmittleres Molekulargewicht Mw gemäß GPC in einem Bereich von 150.000 bis 1.100.000 g/mol aufweist.

In manchen Fällen ist eine erfindungsgemäße Kautschukmischung bevorzugt, vorzugsweise wie als bevorzugt beschrieben, wobei einer, mehrere oder alle des einen oder mehr als einen von (a) verschiedenen Dienkautschuks gemäß (b) durch Substituenten modifiziert ist, so dass ein modifizierter Dienkautschuk resultiert. Vorzugsweise handelt es sich um einen oder mehrere Substituenten, welche vorzugsweise am Polymer-Rückgrat und/oder endständig vorliegen. Diese Substituenten bewirken besonders bevorzugt eine weitere Wechselwirkung mit dem einen oder mehr als einen Ruß als Füllstoff gemäß (d). Solche Kautschuke werden typischerweise auch funktionalisierte Kautschuke genannt.

Vorzugsweise sind diese Substituenten (d.h. für Kautschuke gemäß (b)) unabhängig voneinander ausgewählt aus der Gruppe bestehend aus Hydroxy-Gruppen, EthoxyGruppen, Epoxy-Gruppen, Amino-Gruppen, Ammonium-Gruppen, Aminosiloxan-Gruppen, Carboxy-Gruppen, Phthalocyanin-Gruppen und Silicium-enthaltende Gruppen. Bevorzugte Silicium-enthaltende Gruppen umfassen Silan und/oder Siloxan-Gruppen. Die Auswahl der Substituenten ist jedoch vorzugsweise nicht auf die vorstehend genannten beschränkt. In einigen Fällen umfassen die Substituenten zudem vorzugsweise ein oder mehrere Metalle, umfassend Metallatome und/oder Metallionen. Insbesondere die Amino- und Ammonium-Gruppen treten vorzugsweise mit Rußen in Wechselwirkung.

In anderen Fällen ist eine erfindungsgemäße Kautschukmischung bevorzugt, vorzugsweise wie als bevorzugt beschrieben, wobei der eine oder mehr als eine von (a) verschiedene Dienkautschuk (d.h. gemäß (b)) nicht durch Substituenten modifiziert ist, d.h. es liegen unmodifizierte bzw. unfunktionalisierte Kautschuke für (b) vor. In wieder anderen Fällen ist es bevorzugt, dass sowohl funktionalisierte als auch unfunktionalisierte Kautschuke vorliegen.

Die Glasübergangstemperatur T_{g} eines eingesetzten Kautschuks hat typischerweise einen Einfluss auf die Wärmeentwicklung bzw. Hysterese der entsprechenden Kautschukmischung und somit letztendlich auch auf den Rollwiderstand des gesamten Reifens. Bevorzugt ist eine erfindungsgemäße Kautschukmischung, vorzugsweise wie als bevorzugt beschrieben, wobei der eine oder mehr als eine von (a) verschiedene Dienkautschuk gemäß (b) jeweils eine individuelle Glasübergangstemperatur T_{g} in einem Bereich von -15 bis -120 °C aufweist, vorzugsweise von -20 bis -110 °C, weiter bevorzugt von -30 bis -100 °C, noch bevorzugter von -36 bis -93 °C, noch weiter bevorzugt von -41 bis -86 °C, am bevorzugtesten von -48 bis -78 °C, am weiter bevorzugtesten von -55 bis - 70 °C. Die vorstehend genannten Bereiche gelten besonders bevorzugt für Styrol-Butadien-Kautschuke, wenn (b) solche Kautschuke umfasst.

Besonders bevorzugt umfasst der eine oder mehr als eine von (a) verschiedene Dienkautschuk gemäß (b) einen oder mehr als einen Styrol-Butadien-Kautschuk (SBR) mit einer individuellen Glasübergangstemperatur T_{g} in einem Bereich von -100 bis -15 °C, vorzugsweise von -85 bis -20 °C, weiter vorzugsweise von -70 bis -25 °C, am bevorzugtesten von -60 bis -30 °C.

Besonders bevorzugt umfasst der eine oder mehr als eine von (a) verschiedene Dienkautschuk gemäß (b), zusätzlich oder alternativ zu einem SBR, einen oder mehr als einen Butadien-Kautschuk (BR) mit einer individuellen Glasübergangstemperatur T_{g} in einem Bereich von -120 bis -80 °C, vorzugsweise von -115 bis -85 °C, weiter vorzugsweise von -110 bis -90 °C, am bevorzugtesten von -108 bis -95 °C.

Im Kontext der vorliegenden Erfindung wird die Glasübergangstemperatur T_{g} der Polymere bzw. Kautschuke anhand von Dynamischer Differenz-Kalorimetrie bestimmt (DSC, engl. Dynamic Scanning Calorimetry, gemäß DIN 53765: 1994-03 bzw. ISO 11357-2: 1999-03, Kalibrierte DSC mit Tieftemperatureinrichtung, Kalibrierung nach Gerätetyp und Herstellerangaben, Probe im Aluminiumtiegel mit Aluminiumdeckel, Abkühlung auf Temperaturen niedriger als -120 °C mit 10 °C/min).

Wie bereits oben ausgeführt, umfasst die erfindungsgemäße Kautschukmischung gemäß (c) eine oder mehr als eine Verbindung der Formel (I). Es handelt sich dabei um ein Alterungsschutzmittel, insbesondere zur Eindämmung radikalischer Reaktionen, die zu Netzwerkschädigungen im vulkanisierten, d.h. Schwefel-vernetzten Kautschuk führen.

Bevorzugt ist eine erfindungsgemäße Kautschukmischung, vorzugsweise wie als bevorzugt beschrieben, wobei die eine oder mehr als eine Verbindung der Formel (I) in einer Gesamtmenge vorliegt im Bereich von 0,1 bis 10 phr, bevorzugt von 0,3 bis 8,5 phr, weiter bevorzugt von 0,5 bis 7 phr, besonders bevorzugt von 0,75 bis 5,5 phr, ganz besonders bevorzugt von 1 bis 4,5 phr.

Die Indizes m und n beschreiben die Anzahl der entsprechenden Gruppen R¹ und R². Sofern n gleich 0 (Null) ist, ist dieser Rest nicht vorhanden und stattdessen durch ein Wasserstoffatom ersetzt. Vorzugsweise ist R² optional. Der Index m hingegen ist mindestens 1. Somit ist der Rest R¹ nicht optional und mindestens immer einmal vorhanden.

Dem Fachmann ist ebenfalls klar, dass die Darstellung der Verknüpfungen von (R²)ₙ an die 4 möglichen Kohlenstoffe in dem entsprechenden 6-er Ring der Acridongrundstruktur bedeutet. Diese Gruppe ist maximal an jeder denkbaren Stelle im ihr zugeordneten Ring angeordnet.

Im Kontext der vorliegenden Erfindung ist die Gruppe (R¹) an der äußeren Cyclohexan-Gruppe und/oder, vorzugsweise und, der benachbarten Piperidin-Gruppe angebunden. Diese Gruppe ist mindestens einmal vorhanden, vorzugsweise mehrfach und teilt sich vorzugsweise auf beide cyclische Ringstrukturen auf. Vorzugsweise sind zwei R¹-Gruppen am selben Kohlenstoffatom angebunden; besonders bevorzugt sind diese, alternativ oder zusätzlich, identisch.

R¹ ist ausgewählt aus der Gruppe bestehend aus
xi) C₁- bis C₄-Alkyl-Resten und C₁- bis C₄-Alkoxy-Resten.

Im Kontext der vorliegenden Erfindung bedeutet die Bezeichnung "C₃- bis C₁₂-Reste" einen Rest umfassend 3 bis 12 Kohlenstoffatome. Andere Zahlen haben eine dazu entsprechende Bedeutung. Diese Erklärung gilt *mutatis mutandis* für z.B. für C₁- bis C₄-Alkyl-Reste bzw. C₁- bis C₄-Alkoxy-Reste.

Die Verbindung der Formel (I) weist eine hinreichende bis sehr gute Löslichkeit in Seitenwandmischungen auf, insbesondere zur Anwendung in Fahrzeugreifen. Die Löslichkeit wird vorzugsweise durch geeignete Auswahl der Reste R¹ und/oder R² weiter optimiert. Hierdurch wird ein ungewolltes Ausblühen dieser Verbindung geringgehalten oder sogar weitestgehend verhindert, was wiederum vorteilhaft für die Alterungsschutzwirkung ist. Je weniger an Alterungsschutzmittel ausblüht, desto weniger geht davon beabsichtigt oder unbeabsichtigt über die Oberfläche verloren und desto weniger Alterungsschutzmittel diffundiert wiederum nach. Dies hat auch erhebliche Vorteile für die Umwelt.

Im Kontext der vorliegenden Erfindung gilt grundsätzlich, dass Index n jeweils voneinander unabhängig ist. Das bedeutet zum Beispiel, dass das n in einer ersten Verbindung der Formel (I) unabhängig von einem n in einer zweiten Verbindung der Formel (I) ist. Dies gilt gleichermaßen für Index m. Dies gilt daher insbesondere, wenn mehr als zwei Verbindungen der Formel (I) vorliegen. Dieser Grundsatz findet außerdem Anwendung, wenn die Indizes n und/oder m innerhalb einer einzelnen Verbindung der Formel (I) größer 1 sind. Grundsätzlich gilt dies für die Reste R¹ und R² auch selbst.

In der erfindungsgemäßen Kautschukmischung, vorzugsweise wie als bevorzugt beschrieben, ist der Rest R² unabhängig voneinander ausgewählt aus der Gruppe bestehend aus aliphatischen C₁- bis C₁₂-Resten, aromatischen Resten, Halogen-Resten, Cyano-Resten, Ester-Resten, Keton-Resten, Ether-Resten und Thioether-Resten.

Bevorzugt ist eine erfindungsgemäße Kautschukmischung, vorzugsweise wie als bevorzugt beschrieben, wobei die aliphatischen C₁- bis C₁₂-Reste, vorzugsweise entsprechende Alkylreste, in R² unabhängig voneinander lineare Teilreste, verzweigte Teilreste und/oder cyclische Teilreste umfassen; vorzugsweise linear, verzweigt oder cyclisch sind.

Bevorzugt ist eine erfindungsgemäße Kautschukmischung, vorzugsweise wie als bevorzugt beschrieben, wobei die aliphatischen C₁- bis C₁₂-Reste in R² unabhängig voneinander gesättigt oder ungesättigt sind, vorzugsweise gesättigt. Besonders bevorzugt sind sie somit Alkylreste.

Bevorzugt ist eine erfindungsgemäße Kautschukmischung, vorzugsweise wie als bevorzugt beschrieben, wobei die aliphatischen Reste in R² aliphatische C₁- bis C₁₀-Reste sind, vorzugsweise aliphatische C₁- bis C₈-Reste, weiter bevorzugt aliphatische C₁- bis C₆-Reste, besonders bevorzugt aliphatische C₁- bis C₄-Reste, ganz besonders bevorzugt Methyl- und/oder Ethyl-Reste. Somit handelt es sich bei den genannten aliphatischen Resten vorzugsweise um entsprechende Alkylreste.

In einigen Fällen ist eine erfindungsgemäße Kautschukmischung bevorzugt, vorzugsweise wie als bevorzugt beschrieben, wobei die aliphatischen C₁- bis C₁₂-Reste in R² unabhängig voneinander einen oder mehr als einen Halogen-Substituenten umfassen, vorzugsweise ausgewählt aus der Gruppe bestehend aus Fluor, Chlor und Brom.

Bevorzugt ist eine erfindungsgemäße Kautschukmischung, vorzugsweise wie als bevorzugt beschrieben, wobei die aromatischen Reste in R² unabhängig voneinander 5 bis 20 Kohlenstoffatome umfassen, vorzugsweise 6 bis 15 Kohlenstoffatome, weiter bevorzugt 6 bis 12 Kohlenstoffatome, besonders bevorzugt 6 bis 10 Kohlenstoffatome, am bevorzugtesten 6 bis 8 Kohlenstoffatome.

Bevorzugt ist eine erfindungsgemäße Kautschukmischung, vorzugsweise wie als bevorzugt beschrieben, wobei die aromatischen Reste in R² unabhängig voneinander einen oder mehr als einen Halogen-Substituenten umfassen, vorzugsweise ausgewählt aus der Gruppe bestehend aus Fluor, Chlor und Brom.

Bevorzugt ist eine erfindungsgemäße Kautschukmischung, vorzugsweise wie als bevorzugt beschrieben, wobei die Halogen-Reste in R² unabhängig voneinander ausgewählt sind aus der Gruppe bestehend aus Fluor, Chlor und Brom.

Bevorzugt ist eine erfindungsgemäße Kautschukmischung, vorzugsweise wie als bevorzugt beschrieben, wobei die Ester-Reste, Keton-Reste, Ether-Reste und Thioether-Reste in R² unabhängig voneinander 1 bis 20 Kohlenstoffatome umfassen, vorzugsweise 1 bis 16 Kohlenstoffatome, weiter bevorzugt 1 bis 12 Kohlenstoffatome, besonders bevorzugt 1 bis 9 Kohlenstoffatome, weiter besonders bevorzugt 1 bis 7 Kohlenstoffatome, am bevorzugtesten 1 bis 5 Kohlenstoffatome. In einigen Fällen ist es bevorzugt, dass die vorstehenden Obergrenzen an Kohlenstoffatomen mit mindestens 2 Kohlenstoffatome als Untergrenze kombiniert sind.

Der oder die Reste R² sind besonders bevorzugt durch Auswahl geeigneter Ausgangsverbindungen bereits angebunden.

Bevorzugt ist eine erfindungsgemäße Kautschukmischung, vorzugsweise wie als bevorzugt beschrieben, wobei n und m unterschiedlich oder identisch sind, mit der Maßgabe, dass m nicht den Wert 0 (Null) annehmen kann. Die Anzahl und Art der Substituenten R¹ bzw. R² hat bei entsprechender Auswahl einen entscheidenden Einfluss auf die Löslichkeit der Verbindung innerhalb der erfindungsgemäßen Kautschukmischung.

In anderen Fällen ist eine erfindungsgemäße Kautschukmischung bevorzugt, vorzugsweise wie als bevorzugt beschrieben, wobei in der Verbindung gemäß Formel (I) n gleich 0 (Null) ist.

In einigen Fällen ist eine erfindungsgemäße Kautschukmischung bevorzugt, vorzugsweise wie als bevorzugt beschrieben, wobei in der Verbindung gemäß Formel (I) n gleich Null ist und m gleich 1 oder größer ist. Eine solche Verbindung weist in vielen Fällen eine sehr gute Löslichkeit in der erfindungsgemäßen Kautschukmischung auf und sorgt somit für einen adäquaten Alterungsschutz. Insbesondere wird damit das unerwünschte Ausblühen weiter gesenkt oder ganz verhindert.

Wie bereits oben erwähnt, ist in der Verbindung gemäß Formel (I) der Rest R¹ ausgewählt aus der Gruppe bestehend aus
- xi) C₁- bis C₄-Alkyl-Resten und C₁- bis C₄-Alkoxy-Resten.

Bevorzugt ist eine erfindungsgemäße Kautschukmischung, vorzugsweise wie als bevorzugt beschrieben, wobei die Reste gemäß xi) lineare Teilreste, verzweigte Teilreste und/oder cyclische Teilreste umfassen; vorzugsweise linear, verzweigt oder cyclisch sind.

Ganz besonders bevorzugt ist eine erfindungsgemäße Kautschukmischung, vorzugsweise wie als bevorzugt beschrieben, wobei in Formel (I) R¹ ausgewählt ist aus der Gruppe bestehend aus
C₁- bis C₃-Alkylresten, vorzugsweise C₁- bis C₂-Alkylresten, besonders bevorzugt Methyl-Resten;
   und/oder
m eine ganze Zahl in einem Bereich von 1 bis 10 ist, vorzugsweise von 2 bis 8, besonders bevorzugt von 2 bis 6, ganz besonders bevorzugt von 3 bis 6, am bevorzugtesten von 3 bis 4.

Insbesondere bevorzugt ist eine erfindungsgemäße Kautschukmischung, vorzugsweise wie als bevorzugt beschrieben, wobei in Formel (I) m 2 oder größer ist, R¹ identisch ist und einen Methyl-Rest bedeutet, wobei mindestens zwei Methylreste an dasselbe Kohlenstoffatom gebunden sind.

Am bevorzugtesten ist eine erfindungsgemäße Kautschukmischung, vorzugsweise wie als bevorzugt beschrieben, wobei die Verbindung der Formel (I) gemäß (c) eine Struktur der Formel (II) aufweist

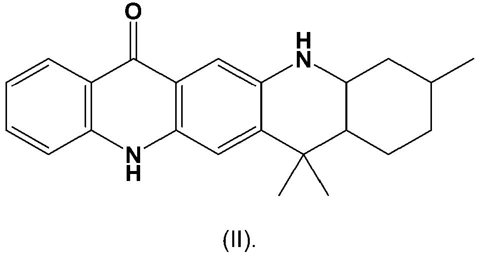

Ganz besonders bevorzugt ist eine erfindungsgemäße Kautschukmischung, vorzugsweise wie als bevorzugt beschrieben, wobei die eine oder mehr als eine Verbindung gemäß Formel (I), bevorzugte Formen dessen bzw. die Verbindung gemäß Formel (II), die einzigen Alterungsschutzmittel sind. Daher ist bevorzugt, dass Verbindungen der Formel (I), bevorzugte Formen dessen bzw. die Verbindung gemäß Formel (II), die einzigen Acridon-Verbindungen in der erfindungsgemäßen Kautschukmischung sind.

Besonders bevorzugt ist eine erfindungsgemäße Kautschukmischung, vorzugsweise wie als bevorzugt beschrieben, nicht umfassend eine Verbindung aus der Gruppe bestehend aus N-Phenyl-N'-(1,3-dimethylbutyl)-p-phenylendiamin (6PPD), N,N'-Diphenyl-p-phenylendiamin (DPPD), N-(1-phenylethyl)-N'-phenyl-p-phenylendiamin (SPPD), N,N'-Ditolyl-p-phenylendiamin (DTPD), N-(1,4-dimethylpentyl)-N'-phenyl-p-phenylendiamin (7PPD), und N-Isopropyl-N'-phenyl-p-phenylendiamin (IPPD); vorzugsweise nicht umfassend irgend ein Phenylendiamin. Solche Verbindungen sind typische konventionelle Alterungsschutzmittel, die im Kontext der vorliegenden Erfindung durch eine oder mehr als eine Verbindung der Formel (I) gemäß (c) ersetzt werden sollen.

Die erfindungsgemäße Kautschukmischung umfasst zudem gemäß (d) einen oder mehr als einen Ruß als Füllstoff in einer Gesamtmenge in einem Bereich von 25 bis 55 phr.

Bevorzugt ist eine erfindungsgemäße Kautschukmischung, vorzugsweise wie als bevorzugt beschrieben, wobei der eine oder mehr als eine Ruß als Füllstoff gemäß (d) in einer Gesamtmenge im Bereich von 25 bis 50 phr vorliegt, vorzugsweise von 29 bis 50 phr, weiter bevorzugt von 29 bis 41 phr. Besonders bevorzugt handelt es sich dabei gleichermaßen um die Gesamtfüllstoffmenge in der erfindungsgemäßen Kautschukmischung. In diesem Fall ist der eine oder mehr als eine Ruß vorzugsweise der einzige Füllstoff.

Bevorzugt ist eine erfindungsgemäße Kautschukmischung, vorzugsweise wie als bevorzugt beschrieben, wobei diese keine Kieselsäure umfasst. Im Kontext der vorliegenden Erfindung haben die Begriffe Kieselsäure und Silica den gleichen Bedeutungsumfang und sind daher synonym.

Sofern die erfindungsgemäße Kautschukmischung zusätzlich zum einen oder mehr als einen Ruß eine oder mehr als eine Kieselsäure umfasst, dann vorzugsweise lediglich in einer vergleichsweise kleinen Gesamtmenge. Dies bedeutet, dass die Gesamtmenge an Rußen größer als die Gesamtmenge an Kieselsäuren ist, vorzugsweise beträgt die Gesamtmenge an Kieselsäuren 10 Gew.-% oder weniger, bezogen auf die Gesamtfüllstoffmenge, vorzugsweise 6 Gew.-% oder weniger, weiter bevorzugt 4 Gew.-% oder weniger, besonders bevorzugt 2 Gew.-% oder weniger, am bevorzugtesten 1 Gew.-% oder weniger.

Als Ruße kommen grundsätzlich alle dem Fachmann bekannten Rußtypen in Frage. Bevorzugt ist der eine oder mehr als eine Ruß ausgewählt aus der Gruppe bestehend aus Industrierußen und Pyrolyse-Rußen, wobei Industrieruße bevorzugt sind.

Bevorzugt weist der eine oder mehr als eine Ruß als Füllstoff gemäß (d) eine Jodzahl auf, gemäß ASTM D 1510 (die auch als Jodadsorptionszahl bezeichnet wird), in einem Bereich von 40 bis 130 g/kg, bevorzugt von 60 bis 125 g/kg, besonders bevorzugt von 70 bis 125 g/kg, und ganz besonders bevorzugt von 80 bis 95 g/kg, und/oder eine DBP-Zahl, gemäß ASTM D 2414, in einem Bereich von 60 bis 150 ml/100 g, bevorzugt von 95 bis 140 ml/100 g, besonders bevorzugt von 110 bis 130 ml/100 g. Die DBP-Zahl gemäß ASTM D 2414 bestimmt das spezifische Absorptionsvolumen eines Rußes oder eines hellen Füllstoffes mittels Dibutylphthalat. Die Verwendung solcher Ruße in der erfindungsgemäßen Kautschukmischung liefert typischerweise sehr gute Ergebnisse. Ganz besonders bevorzugt ist ein Ruß des Typs N339, N326, N220, N234, N330, N358, N550 und/oder N121. Weiter bevorzugt weist der Ruß eine CTAB-Oberfläche (gemäß ASTM D 3765) im Bereich von 20 bis 150 m²/g, bevorzugt von 30 bis 140 m²/g, besonders bevorzugt von 50 bis 130 m²/g, ganz besonders bevorzugt von 80 bis 125 m²/g.

Im Kontext der vorliegenden Erfindung gehört Zinkoxid nicht zu den Füllstoffen im Sinne der vorliegenden Erfindung, sondern zu bevorzugten weiteren Zusatzstoffen (siehe Text weiter unten zu weiteren Zusatzstoffen).

Die erfindungsgemäße Kautschukmischung umfasst gemäß (e) als zusätzliches Alterungsschutzmittel 2,2,4-Trimethyl-1,2-dihydrochinolin (TMQ), Dimere, Oligomere und/oder Polymere daraus. Vorzugsweise handelt es sich dabei um die einzigen Chinolin-Verbindungen in der erfindungsgemäßen Kautschukmischung. Besonders bevorzugt ist eine erfindungsgemäße Kautschukmischung, wobei (e) mindestens Dimere des TMQ umfasst, vorzugsweise mit einem Dimeranteil von 30% oder mehr, bezogen auf alle TMQ-Spezies, besonders bevorzugt in einem Bereich von 35 bis 90%. Es wird allgemein angenommen, dass es sich bei den Dimeren um die typische aktive Spezies des TMQ handelt. Im Kontext der vorliegenden Erfindung bedeutet in diesem Zusammenhang "Oligomere" 3 bis 10 Monomere des TMQ; der Begriff "Polymere" mehr als 10 Monomere, vorzugsweise 10 bis 50 Monomere. Die Anwesenheit von (e) zeigt eine synergistische Verstärkung des Alterungsschutzes in den erfindungsgemäßen Kautschukmischungen. Mit anderen Worten, die Verstärkung geht über ein bloßes kombinatorisches, additives Zusammenwirken hinaus (siehe Beispiele).

Bevorzugt ist eine erfindungsgemäße Kautschukmischung, vorzugsweise wie als bevorzugt beschrieben, wobei das zusätzliche Alterungsschutzmittel gemäß (e) in einer Gesamtmenge in einem Bereich von 0,1 bis 8 phr vorliegt, vorzugsweise von 0,3 bis 6 phr, weiter bevorzugt von 0,6 bis 4 phr, am bevorzugtesten von 0,9 bis 2 phr.

Die erfindungsgemäße Kautschukmischung umfasst zudem vorzugsweise
(f) einen oder mehr als einen Weichmacher.

Bevorzugt ist eine erfindungsgemäße Kautschukmischung, vorzugsweise wie als bevorzugt beschrieben, wobei der eine oder mehr als eine Weichmacher gemäß (f) ausgewählt ist aus der Gruppe bestehend aus Ölen und Harzen. Bevorzugte Öle umfassen Mineralöle und/oder Pflanzenöle, wobei Pflanzenöle besonders bevorzugt sind. In einigen Fällen umfasst ein besonders bevorzugtes Pflanzenöl Rapsöl. Pflanzenöle umfassen typischerweise Triglyceride. Bevorzugte Mineralöle umfassen aromatische, naphthenische und/oder paraffinische Mineralöle. Insbesondere bevorzugte Mineralöle umfassen MES (mild extraction solvate), DAE (Destillated Aromatic Extracts), RAE (Residual Aromatic Extract), TDAE (treated distillate aromatic extract), und Rubber-to-Liquid-Öle (RTL). In einigen Fällen ist besonders bevorzugt eine Kombination aus einem oder mehr als einem Mineralöl und einem oder mehr als einem Pflanzenöl.

Bevorzugt ist eine erfindungsgemäße Kautschukmischung, vorzugsweise wie vorstehend und/oder nachstehend als bevorzugt beschrieben, wobei der eine oder mehr als eine Weichmacher gemäß (f) in der Kautschukmischung in einer Gesamtmenge im Bereich von 1 bis 30 phr vorliegt, bevorzugt von 1,5 bis 25 phr, besonders bevorzugt von 2 bis 20 phr, ganz besonders bevorzugt von 2,5 bis 15 phr, am bevorzugtesten von 4 bis 12 phr.

Bevorzugte Harze umfassen Kohlenwasserstoffharze oder natürliche Harze. Besonders bevorzugt umfassen die Harze eines aus der Gruppe bestehend aus AMS Harzen, Terpenharzen, Phenolharzen, Cumaron-Inden-Harzen, aliphatischen Kohlenwasserstoffharzen, aromatischen Kohlenwasserstoffharzen und natürlichen Harzen. Sofern Harze als Bestandteil der Weichmacher eingesetzt werden, liegt deren Gesamtmenge anteilig in einem Bereich von 0,5 bis 4 phr. Ein solcher vergleichsweise geringer Harzanteil wirkt sich in einigen Fällen vorteilhaft auf die Rissbeständigkeit aus und beeinflusst in erster Linie in vorteilhafter Weise die Klebrigkeit.

Bevorzugt ist eine erfindungsgemäße Kautschukmischung, vorzugsweise wie als bevorzugt beschrieben, umfassend einen oder mehr als einen weiteren Zusatzstoff. Hierbei handelt es sich vorzugsweise um übliche Zusatzstoffe in den typischen Mengen, die bei der Herstellung einer entsprechenden Kautschukmischung vorzugsweise in wenigstens eine Grundmischstufe zugegeben werden.

Vorzugsweise umfasst der eine oder mehr als eine weitere Zusatzstoff:
i) weitere Alterungsschutzmittel, die keine Verbindung der Formel (I) sind (bzw. kein Bestandteil der Komponente gemäß (c) und kein Bestandteil der Komponente (e)); dies ist jedoch nur in Ausnahmefällen gewünscht und daher keineswegs bevorzugt; vorzugsweise umfasst die erfindungsgemäße Kautschukmischung, vorzugsweise wie als bevorzugt beschrieben, keine von Komponente (c) und (e) abweichenden, weiteren Alterungsschutzmittel;
ii) einen Aktivator; vorzugsweise umfassend Zinkverbindungen (inklusive Zinkkomplexe) und/oder Fettsäuren; besonders bevorzugt umfassend Zinkoxid, Stearinsäure und/oder Zinkethylhexanoat;
iii) optional Agenzien für die Anbindung an einen Ruß, vorzugsweise Verbindungen, die mit Carboxylgruppen reagieren und/oder pericyclische Reaktionen eingehen;
iv) Ozonschutzwachse;
v) Harze, vorzugsweise Klebharze, die keine Weichmacherharze sind;
vi) Mastikationshilfsmittel; vorzugsweise umfassend 2,2'-Dibenzamidodiphenyldisulfid (DBD); und/oder
vii) Prozesshilfsmittel; vorzugsweise umfassend Fettsäureester und/oder Metallseifen, wobei bevorzugte Metallseifen Zinkseifen und/oder Calciumseifen umfassen.

Bevorzugt ist eine erfindungsgemäße Kautschukmischung, vorzugsweise wie als bevorzugt beschrieben, wobei der eine oder mehr als eine weitere Zusatzstoff in einer Gesamtmenge im Bereich von 1 bis 150 phr umfasst ist, bevorzugt von 2 bis 100 phr, weiter bevorzugt von 5 bis 80 phr, am bevorzugtesten von 7 bis 60 phr.

Bei den optionalen Agenzien für die Anbindung an einen Ruß (siehe iii) oben) handelt es sich vorzugsweise um alle dem Fachmann bekannte Typen. Vorzugsweise umfasst die erfindungsgemäße Kautschukmischung, vorzugsweise wie als bevorzugt beschrieben, eine oder mehr als eine Verbindung aus der Gruppe bestehend aus Aminen, Imidazolen, und Pyrazolen.

Bevorzugt ist eine erfindungsgemäße Kautschukmischung, vorzugsweise wie als bevorzugt beschrieben, umfassend einen oder mehr als einen Aktivator (siehe ii) oben); vorzugsweise eine Zinkverbindung, besonders bevorzugt Zinkoxid. Hinsichtlich der Typen an Zinkoxid gibt es vorzugsweise keine Einschränkung. Bevorzugt ist ein Granulat und/oder ein Pulver. Bevorzugt besitzt das Zinkoxid eine BET-Oberfläche bis zu 100 m²/g, vorzugsweise in einem Bereich von 1 bis 100 m²/g. In einigen Fällen ist ein Zinkoxid bevorzugt, wobei die BET-Oberfläche kleiner 10 m²/g ist. In anderen Fällen ist ein Zinkoxid bevorzugt, wobei die BET-Oberfläche im Bereich von 10 bis 100 m²/g liegt, besonders bevorzugt sind sogenannte "nano-Zinkoxide". Vorzugsweise liegt der eine oder mehr als eine Aktivator, insbesondere bevorzugt die Zinkverbindung, in einer Gesamtmenge vor in einem Bereich von 1 bis 15 phr, vorzugsweise von 2 bis 12 phr, am bevorzugtesten von 4 bis 10 phr.

Die erfindungsgemäße Kautschukmischung ist schwefelvernetzbar, d.h. vulkanisierbar, wobei im Kontext der vorliegenden Erfindung beide Begriffe bedeutungsgleich und somit synonym sind. Die dadurch ausgelöste Vernetzungsreaktion führt zu einem Vulkanisat, welches vollständig oder zumindest teilweise vulkanisiert ist, vorzugsweise vollständig vulkanisiert. Dem Fachmann ist jedoch selbstverständlich klar, dass bis zur maßgeblichen Verarbeitung bzw. Verwendung die Kautschukmischung typischerweise nicht vulkanisiert vorliegt.

Die Vulkanisation bzw. das Vulkanisieren der erfindungsgemäßen Kautschukmischung erfolgt bevorzugt in Anwesenheit von Schwefel und/oder Schwefelspendern, vorzugsweise unter Mitwirkung von Vulkanisationsbeschleunigern, wobei vorzugsweise einige Vulkanisationsbeschleuniger zugleich Schwefelspender sind.

Bevorzugt ist eine erfindungsgemäße Kautschukmischung, vorzugsweise wie als bevorzugt beschrieben, zusätzlich umfassend
(g) Schwefel und/oder einen oder mehr als einen Schwefelspender.

Hinsichtlich der Schwefelspender gibt es keine besondere Einschränkung, so dass grundsätzlich alle für den Fachmann bekannten Schwefelspender in Betracht kommen, solange sie unter den vorliegenden Bedingungen Schwefel in entsprechender Form zur Verfügung stellen. Der eine oder mehr als eine Schwefelspender ist vorzugsweise ausgewählt aus der Gruppe bestehend aus Thiuramdisulfiden, Thiuramtetrasulfiden, Dithiophosphaten, und Polysulfiden. Bevorzugte Thiuramdisulfide umfassen Tetrabenzylthiuramdisulfid (TBzTD), Tetramethylthiuramdisulfid (TMTD) und/oder Tetraethylthiuramdisulfid (TETD). Bevorzugte Thiuramtetrasulfide umfassen Dipentamethylenthiuramtetrasulfid (DPTT). Bevorzugte Dithiophosphate umfassen Bis(diisopropyl)thiophosphoryldisulfid (DIPDIS), Zinkdichloryldithiophosphat, und/oder Zinkalkyldithiophosphat. Bevorzugte Polysulfide umfassen Bis(O,O-2-ethylhexyl-thiophosphoryl)polysulfid, Diarylpolysulfide und/oder Dialkylpolysulfide.

Bevorzugt ist eine erfindungsgemäße Kautschukmischung, vorzugsweise wie als bevorzugt beschrieben, wobei der Schwefel und der eine oder mehr als eine Schwefelspender in einer Gesamtmenge in einem Bereich von 0,1 bis 5 phr vorliegt, vorzugsweise von 0,5 bis 4 phr, weiter bevorzugt von 1 bis 3,5 phr, am bevorzugtesten von 1,5 bis 3 phr.

Bevorzugt ist eine erfindungsgemäße Kautschukmischung, vorzugsweise wie als bevorzugt beschrieben, umfassend (alternativ oder zusätzlich zu einem Schwefelspender) einen oder mehr als einen Vulkanisationsbeschleuniger.

Bevorzugte Vulkanisationsbeschleuniger umfassen Thiazolbeschleuniger, Mercaptobeschleuniger, Sulfenamidbeschleuniger, Thiocarbamatbeschleuniger, Thiurambeschleuniger, Thiophosphatbeschleuniger, Thioharnstoffbeschleuniger, Xanthogenat-Beschleuniger, Guanidin-Beschleuniger, und/oder Kombinationen daraus. Besonders bevorzugt sind Sulfenamidbeschleuniger, insbesondere Thiazolsulfenamidbeschleuniger, und Guanidin-Beschleuniger. Besonders bevorzugt ist ein oder mehr als ein Beschleuniger ausgewählt aus der Gruppe bestehend aus N-Cyclohexyl-2-benzothiazolsulfenamid (CBS), N,N-Dicyclohexylbenzothiazol-2-sulfenamid (DCBS), N-tert-butyl-2-benzothiazole sulfenimide (TBSI), Benzothiazyl-2-sulfenmorpholid (MBS), N-tert-Butyl-2-benzothiazylsulfenamid (TBBS) und Diphenylguanidin (DPG).

Bevorzugt ist eine erfindungsgemäße Kautschukmischung, vorzugsweise wie als bevorzugt beschrieben, umfassend einen oder mehr als einen Vulkanisationsverzögerer. Die Anwesenheit eines Vulkanisationsverzögerers trägt beispielsweise zu einem besser ausbalancierten Vulkanisationsverlauf bei.

Die erfindungsgemäße Kautschukmischung wird vorzugsweise hergestellt oder bereitgestellt, besonders bevorzugt hergestellt. Dies erfolgt vorzugsweise nach in der Kautschukindustrie üblichen Verfahren, bei denen zunächst in einer oder mehr als einer Mischstufe eine Grundmischung mit allen Bestandteilen außer (d.h. abzüglich) dem Vulkanisationssystem bereitgestellt wird, wobei das Vulkanisationssystem den Schwefel und die vulkanisationsbeeinflussenden Verbindungen umfasst, d.h. vorzugsweise die Gesamtmenge aus Schwefel, Schwefelspender, Vulkanisationsbeschleuniger und Vulkanisationsverzögerer. Durch Zugabe des Vulkanisationssystems in einer letzten Mischstufe wird eine Fertigmischung erzeugt, welche vorzugsweise durch Extrusion und/oder Kalandrieren weiterverarbeitet und in die gewünschte Form gebracht wird. Die dabei erzielte Form entscheidet vorzugsweise über die anschließende Verwendung, wie z.B. als Seitenwand in einem Fahrzeugreifen, vorzugsweise einen Fahrzeugluftreifen.

Die vorliegende Erfindung betrifft zudem einen Vulkanisat umfassend oder bestehend aus der erfindungsgemäßen schwefelvernetzbaren Kautschukmischung, vorzugsweise wie als bevorzugt definiert, wobei das Vulkanisat durch Schwefelvulkanisation resultiert.

Das vorstehend Gesagte zu der erfindungsgemäßen Kautschukmischung, jeweils inklusive bevorzugter Ausgestaltungen, gilt vorzugsweise *mutatis mutandis* auch für das erfindungsgemäße Vulkanisat.

Weiter betrifft die vorliegende Erfindung ein Reifenbauteil umfassend oder bestehend aus dem erfindungsgemäßen Vulkanisat, vorzugsweise wie als bevorzugt definiert, wobei das Reifenbauteil vorzugsweise eine Seitenwand oder ein Teil einer Seitenwand ist.

Das vorstehend Gesagte zu der erfindungsgemäßen Kautschukmischung bzw. zum erfindungsgemäßen Vulkanisat, jeweils inklusive bevorzugter Ausgestaltungen, gilt vorzugsweise *mutatis mutandis* auch für das erfindungsgemäße Reifenbauteil.

In manchen Fällen besteht das erfindungsgemäße Reifenbauteil vollständig aus einem oder mehr als einem erfindungsgemäßen Vulkanisat. In anderen Fällen umfasst das erfindungsgemäße Reifenbauteil lediglich teilweise ein oder mehr als ein erfindungsgemäßes Vulkanisat. Vorzugsweise umfasst das erfindungsgemäße Reifenbauteil überwiegend ein oder mehr als ein erfindungsgemäßes Vulkanisat. Zusätzlich sind ggf. auch Vulkanisate enthalten, die nicht erfindungsgemäß sind.

Die vorliegende Erfindung betrifft zudem einen Fahrzeugreifen, vorzugsweise einen Fahrzeugluftreifen, der ein, zwei oder mehr als zwei erfindungsgemäße Reifenbauteile, vorzugsweise wie vorstehend als bevorzugt definiert, aufweist.

Das vorstehend Gesagte zu der erfindungsgemäßen Kautschukmischung bzw. zum erfindungsgemäßen Vulkanisat und Reifenbauteil, jeweils inklusive bevorzugter Ausgestaltungen, gilt vorzugsweise *mutatis mutandis* auch für den erfindungsgemäßen Fahrzeugreifen.

Vorzugsweise ist der erfindungsgemäße Fahrzeugreifen vulkanisiert, d.h. kein Fahrzeugreifenrohling.

Vorzugsweise ist der erfindungsgemäße Fahrzeugreifen, vorzugsweise wie als bevorzugt beschrieben, ausgewählt aus der Gruppe bestehend aus Industrie- und Baustellenfahrzeugreifen, LKW-, PKW-, Van- und Zweiradreifen.

Nachfolgend wird die Erfindung durch Ausführungsbeispiele näher erläutert.

Die Verbindung gemäß Formel (II), als beispielhafte Ausgestaltung einer Verbindung gemäß Formel (I), wurde gemäß WO 2023/143677 A1, "Synthese von 3,14,14-trimethyl-2,3,4,4a,5,12,14,14a-octahydroquinolino[2,3-b]acridin-7(1H)-one" bereitgestellt.

Die erfindungsgemäße Kautschukmischung wurde mit dieser Verbindung auf eine für den Fachmann bekannte Weise bereitgestellt. Die sich ergebenden erfindungsgemäßen Beispiele sind mit "E" gekennzeichnet; Vergleichsversuche mit "V". Für die experimentelle Auswertung wurden Prüfkörper in Form einer Scheibe (Durchmesser 6 cm, 6 mm Dicke; zur Präparation von unter anderem Zugversuchen) erstellt, welche nach Formgebung bei einer Temperatur von 160°C vulkanisiert wurden.

Die Prüfkörper wurden nach der Vulkanisation in zwei Gruppen geteilt. Eine Gruppe Prüfkörper wurde zur Alterung für 56 Tage bei konstant 70°C in einem Wärmeschrank gealtert. Die andere Gruppe Prüfkörper wurde für weitere Labormessung im ungealterten Zustand unmittelbar verwendet, während die gealterten Prüfkörper der ersten Gruppe erst nach deren Alterung vermessen wurden.

Als Vergleich dienen insbesondere Kautschukmischungen, die als Alterungsschutzmittel das typischerweise eingesetzte 6PPD enthalten. Die Mischungen sind nachfolgend in Tabelle 1 zusammengefasst und eigenen sich insbesondere für Reifenbauteile wie Seitenwände eines Fahrzeugreifens.

**Tabelle 1, Kautschukmischungen, alle Angaben in phr sowie Ergebnisse**

| **Bestandteil** | **V1** | **V2** | **V3** | **V4** | **V5** | **E1** |
|---|---|---|---|---|---|---|
| IR | 100 | 100 | 0 | 0 | 0 | 0 |
| NR^{a} | 0 | 0 | 80 | 80 | 80 | 80 |
| BR^{b} | 0 | 0 | 20 | 20 | 20 | 20 |
| Ruß^{c1} | 50 | 50 | 0 | 0 | 0 | 0 |
| Ruß^{c2} | 0 | 0 | 50 | 50 | 50 | 50 |
| Öl^{d} | 10 | 10 | 10 | 10 | 10 | 10 |
| 6PPD | 2 | 0 | 2 | 0 | 2 | 0 |
| Formel (II) | 0 | 2 | 0 | 2 | 0 | 2 |
| TMQ | 0 | 0 | 0 | 0 | 1 | 1 |
| ZnO | 3 | 3 | 3 | 3 | 3 | 3 |
| Stearinsäure | 2 | 2 | 2 | 2 | 2 | 2 |
| Beschleuniger | 1,2 | 1,2 | 1,2 | 1,2 | 1,2 | 1,2 |
| Schwefel | 1,2 | 1,2 | 1,2 | 1,2 | 1,2 | 1,2 |
| Ergebnisse | | | | | | |
| Leistungsindex A | 100 | 82 | 100 | 80 | 100 | 77 |
| Leistungsindex B | 100 | 100 | 100 | 61 | 100 | 59 |

| | | | | | | |
|---|---|---|---|---|---|---|
| ^{a}NR TSR ^{b} Europrene Neocis BR 40, Fa. Polimeri ^{c1} Ruß (Füllstoff): N339, Fa. Orion Engineered Carbons ^{c2} Ruß (Füllstoff): N121, Fa. Orion Engineered Carbons ^{d}TDAE | | | | | | |

Wie bereits oben erwähnt, ist in der erfindungsgemäßen Kautschukmischung, die insbesondere für Seitenwände in Fahrzeugreifen geeignet ist, eine synergistische Leistungssteigerung in der Alterungsschutzwirkung zu beobachten.

Obwohl aus der WO 2023/143677 A1 bereits bekannt ist, dass eine Verbindung der Formel (II) eine grundsätzlich gesteigerte Schutzwirkung verglichen mit 6PPD bewirkt, so konnte nicht notwendigerweise erwartet werden, dass insbesondere in Kombination mit TMQ eine zusätzliche, synergistisch verbesserte Schutzwirkung eintritt.

Diese Schlussfolgerung beruht auf den in Tabelle 1 genannten Parametern "Leistungsindex A" und "B". Im Kontext der vorliegenden Erfindung bedeutet:
- Leistungsindex A:: Dieser Index beruht auf Rückprall-Messungen (ISO 4662, Resilience [%] bei Raumtemperatur).
Für die Bestimmung des Leistungsindexes wurde zunächst der Wert einer ungealterten Probe mit 6PPD bestimmt; nach Abschluss der Alterung der Messwert der korrespondierenden gealterten Probe. Aus beiden Messwerten wurde eine Differenz gebildet, die eine auf den Messwert "Rückprall" beruhende absolute "Alterungsverschiebung" eines 6PPD-haltigen Prüfkörpers ergibt. Diese Differenz wurde zum Zwecke einer einfacheren Vergleichbarkeit auf einen Wert von 100 referenziert (Referenzwert; siehe V1 und V3; wobei V5 explizit kein Referenzwert ist).
Dieses Vorgehen wurde mit einem Prüfkörper wiederholt, der auf einer erfindungsgemäßen Kautschukmischung beruht (hier enthaltend Verbindung der Formel (II)). Die aus diesen Messerwerten erhaltene Differenz wurde zum Referenzwert ins Verhältnis gesetzt (Verhältniswert; siehe V2, V4, V5 und E1, wobei V5 tatsächlich ein Verhältniswert darstellt, der auf V3 referenziert ist). Der Verhältniswert stellt eine relative Alterungsverschiebung bezogen auf den 6PPDenthaltenden Prüfkörper dar (siehe V1 vs., V2; V3 vs. V4, V5 und E1). Sowohl Referenzwert als auch Verhältniswert sind dimensionslos. Ein Verhältniswert kleiner 100 stellt eine Verbesserung dar, da das Ausmaß des Alterungseinflusses geringer ausfällt. Mit anderen Worten, ein kleinerer Wert weist darauf hin, dass die relative Alterungsverschiebung kleiner ist und somit eine qualitativ verbesserte Alterungsschutzwirkung erreicht wird, da Alterungsänderungen durch das entsprechende Alterungsschutzmittel effektiver unterbunden werden, bzw. die Alterungsreaktionen stärker gebremst werden.
- Leistungsindex B:: Dieser Index beruht auf Zugfestigkeits-Messungen (ASTM D 412; Messwert: M100 in [MPa], gemessen bei Raumtemperatur). Dieser Leistungsindex wurde analog zum Vorgehen wie unter "Leistungsindex A" beschrieben, bestimmt. Das dort Gesagte gilt hier entsprechend, hier jedoch beruhend auf einem Messwert aus einer Zugfestigkeitsmessung.

Die Ergebnisse V1 und V2 entsprechen den Mischungen, die aus dem Stand der Technik (WO 2023/143677 A1) bereits bekannt sind. Aus der WO 2023/143677 A1 ist bereits ein verbesserter Langzeitschutz durch eine Verbindung der Formel (II) grundsätzlich bekannt, jedoch kein synergistisches Zusammenspiel. Die konkrete Schutzwirkung der darin offenbarten Kautschukmischung, d.h. unter Maßgabe der hier herangezogenen Leistungsindizes A und B, ist im relativen Vergleich zwischen V1 und V2 zunächst einmal mit Blick auf Leistungsindex A zu erkennen (82 vs. 100), wobei bei Leistungsindex B keine Veränderung zu beobachten war.

Die Versuche V3 bis einschließlich E1 zeigen nun die Ergebnisse, die sich grundsätzlich auf Kautschukmischungen beziehen, die insbesondere für Seitenwände konzipiert sind, wobei V3 als Referenzwert dient und auf 6PPD ohne TMQ beruht. Vergleichsversuch V4 enthält eine Verbindung der Formel (II) und entspricht gewissermaßen der bekannten Lehre aus der WO 2023/143677 A1, nun jedoch angewendet auf eine typische Seitenwandkautschukmischung. Sowohl für Leistungsindex A als auch B wurde eine erwartbare Verbesserung des Alterungsschutzes beobachtet, wobei dieser für Leistungsindex B überaus signifikant ausfällt (61 vs. 100), verglichen mit V1 vs. V2. Um die synergistische Wirkung von TMQ herauszustellen, wurde in V5 TMQ mit 6PPD in Kombination eingesetzt. Überraschenderweise zeigt TMQ hier keinen Einfluss und bewirkt verglichen mit V3 identische Werte. Folglich trägt TMQ in Kombination mit 6PPD in einer typischen Seitenwandkautschukmischung nicht zu einer Verbesserung der Leistungsindizes A und B bei; mit anderen Worten, dessen Beitrag ist Null.

Das erfindungsgemäße Beispiel E1 zeigt nun den Effekt, der aus Kombination einer Verbindung der Formel (II) mit TMQ resultiert. Der Einsatz von TMQ verstärkt den Alterungsschutz in synergistischer Weise mit Blick auf die Leistungsindizes A und B. Die in Vergleichsbeispiel V4 erreichten Werte werden gemäß E1 nochmal und auf synergistische Weise verbessert (77 vs. 80 für Leistungsindex A; 59 vs. 61 für Leistungsindex B).

## Patentansprüche

1. Eine schwefelvernetzbare Kautschukmischung umfassend
(a) einen oder mehr als einen Polyisopren-Kautschuk in einer Gesamtmenge in einem Bereich von 40 bis 80 phr;
(b) einen oder mehr als einen von (a) verschiedenen Dienkautschuk in einer Gesamtmenge in einem Bereich von 20 bis 60 phr;
(c) eine oder mehr als eine Verbindung der Formel (I) 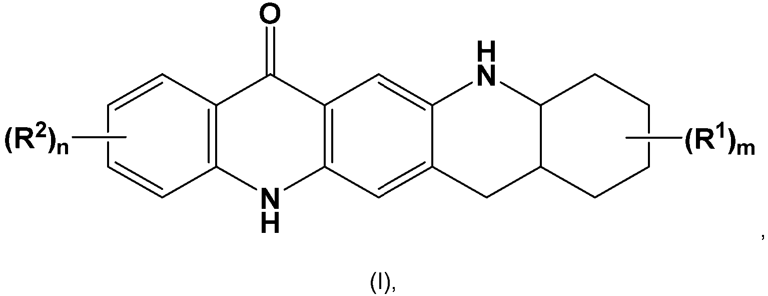 wobei
R¹ an der äußeren Cyclohexan-Gruppe und/oder der benachbarten Piperidin-Gruppe gebunden ist und unabhängig voneinander ausgewählt ist aus der Gruppe bestehend aus
xi) C₁- bis C₄-Alkyl-Resten und C₁- bis C₄-Alkoxy-Resten,
und
der Rest R² unabhängig voneinander ausgewählt ist aus der Gruppe bestehend aus
aliphatischen C₁- bis C₁₂-Resten, aromatischen Resten, Halogen-Resten, Cyano-Resten, Ester-Resten, Keton-Resten, Ether-Resten und Thioether-Resten,
und wobei
n den Wert 0 oder 1 oder 2 oder 3 oder 4 annimmt und die Reste R² im Fall von n gleich 2 oder 3 oder 4 unabhängig voneinander gleich oder verschieden sind, und
m eine ganze Zahl in einem Bereich von 1 bis 12 ist, wobei die Reste R¹ im Fall von m gleich 2 oder größer unabhängig voneinander gleich oder verschieden sind;
(d) einen oder mehr als einen Ruß als Füllstoff in einer Gesamtmenge in einem Bereich von 25 bis 55 phr; und
(e) als zusätzliches Alterungsschutzmittel 2,2,4-Trimethyl-1,2-dihydrochinolin (TMQ), Dimere, Oligomere und/oder Polymere daraus.

2. Kautschukmischung nach Anspruch 1, wobei der eine oder mehr als eine Polyisopren-Kautschuk gemäß (a) mindestens einen natürlichen Polyisopren-Kautschuk (NR) und/oder mindestens einen synthetischen Polyisopren-Kautschuk (IR) umfasst.

3. Kautschukmischung nach Anspruch 1 oder 2, wobei der eine oder mehr als eine von (a) verschiedenen Dienkautschuk gemäß (b) einen oder mehr als einen Butadien-Kautschuk (BR) und/oder einen oder mehr als einen Styrol-Butadien-Kautschuk (SBR) umfasst.

4. Kautschukmischung nach einem der Ansprüche 1 bis 3, wobei in der Verbindung gemäß Formel (I) n gleich 0 (Null) ist.

5. Kautschukmischung nach einem der Ansprüche 1 bis **4,** wobei in Formel (I) R¹ ausgewählt ist aus der Gruppe bestehend aus
C₁- bis C₃-Alkylresten, vorzugsweise C₁- bis C₂-Alkylresten, besonders bevorzugt Methyl-Resten;
und/oder
m eine ganze Zahl in einem Bereich von 1 bis 10 ist, vorzugsweise von 2 bis 8, besonders bevorzugt von 2 bis 6, ganz besonders bevorzugt von 3 bis 6, am bevorzugtesten von 3 bis 4.

6. Kautschukmischung nach einem der Ansprüche 1 bis 5, wobei in Formel (I) m 2 oder größer ist, R¹ identisch ist und einen Methyl-Rest bedeutet, wobei mindestens zwei Methylreste an dasselbe Kohlenstoffatom gebunden sind.

7. Kautschukmischung nach einem der Ansprüche 1 bis 6, wobei die Verbindung der Formel (I) gemäß (c) eine Struktur der Formel (II) aufweist

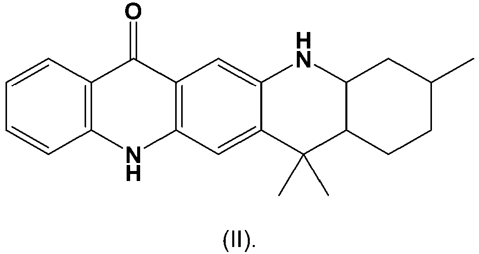

8. Kautschukmischung nach einem der Ansprüche 1 bis 7, wobei der eine oder mehr als eine Ruß als Füllstoff gemäß (d) in einer Gesamtmenge im Bereich von 25 bis 50 phr vorliegt, vorzugsweise von 29 bis 50 phr, weiter bevorzugt von 29 bis 41 phr.

9. Kautschukmischung nach einem der Ansprüche 1 bis 8, wobei diese keine Kieselsäure umfasst.

10. Kautschukmischung nach einem der Ansprüche 1 bis 9, wobei der eine oder mehr als eine Ruß als Füllstoff gemäß (d) eine Jodzahl, gemäß ASTM D 1510, in einem Bereich von 40 bis 130 g/kg aufweist, bevorzugt von 60 bis 125 g/kg, besonders bevorzugt von 70 bis 125 g/kg, und ganz besonders bevorzugt von 80 bis 95 g/kg,.

11. Kautschukmischung nach einem der Ansprüche 1 bis 10, wobei der eine oder mehr als eine Ruß als Füllstoff gemäß (d) eine DBP-Zahl, gemäß ASTM D 2414, in einem Bereich von 60 bis 150 ml/100 g aufweist, bevorzugt von 95 bis 140 ml/100 g, besonders bevorzugt von 110 bis 130 ml/100 g.

12. Kautschukmischung nach einem der Ansprüche 1 bis 11, wobei das zusätzliche Alterungsschutzmittel gemäß (e) in einer Gesamtmenge in einem Bereich von 0,1 bis 8 phr vorliegt, vorzugsweise von 0,3 bis 6 phr, weiter bevorzugt von 0,6 bis 4 phr, am bevorzugtesten von 0,9 bis 2 phr.

13. Ein Vulkanisat umfassend oder bestehend aus der schwefelvernetzbaren Kautschukmischung nach einem der Ansprüche 1 bis 12, wobei das Vulkanisat durch Schwefelvulkanisation resultiert.

14. Ein Reifenbauteil umfassend oder bestehend aus dem Vulkanisat gemäß Anspruch 13, wobei das Reifenbauteil vorzugsweise eine Seitenwand oder ein Teil einer Seitenwand ist.

15. Ein Fahrzeugreifen, vorzugsweise ein Fahrzeugluftreifen, der ein, zwei oder mehr als zwei Reifenbauteile gemäß Anspruch 14 aufweist.
